**Europäisches Patentamt**

**European Patent Office**

**Office européen des brevets**

(19)

(11) Veröffentlichungsnummer: **0 084 845
B1**

(12) **EUROPÄISCHE PATENTSCHRIFT**

(45) Veröffentlichungstag der Patentschrift:
23.04.86

(21) Anmeldenummer: 83100402.3

(22) Anmeldetag: 18.01.83

(51) Int. Cl.⁴: **A 47 C 1/024,** A 47 C 7/38,
A 47 C 7/14 // B60N1/02,
B60N1/06, B60N1/10,
B61D33/00, B64D11/06

(54) **Reisesitz.**

(30) Priorität: **21.01.82 DE 3201650**

(43) Veröffentlichungstag der Anmeldung:
**03.08.83 Patentblatt 83/31**

(45) Bekanntmachung des Hinweises auf die Patenterteilung:
**23.04.86 Patentblatt 86/17**

(84) Benannte Vertragsstaaten:
**AT BE CH FR IT LI NL SE**

(56) Entgegenhaltungen:
**WO - A - 81/03116
DE - A - 2 262 594
DE - C - 689 438
FR - A - 1 094 637
FR - A - 2 067 806
FR - A - 2 391 680
GB - A - 863 227
US - A - 2 013 481
US - A - 3 598 442**

(73) Patentinhaber: **Firma Willibald Grammer,
Ziegelgasse 12, D-8450 Amberg 2 (DE)**

(72) Erfinder: **Meiller, Hermann, Pfistermeisterstrasse 39,
D-8450 Amberg (DE)**

(74) Vertreter: **LOUIS, PÖHLAU, LOHRENTZ & SEGETH,
Kesslerplatz 1 P.B. 3055, D-8500 Nürnberg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

# Beschreibung

Die Erfindung betrifft einen Riesesitz mit einem Träger für ein Sitzpolster und einem Träger für ein Rückenlehnenpolster sowie einer Klappe, die von unten her im hinteren Bereich des Sitzpolsters auf dieses einwirkt, und einer Klappe, die von hinten her im unteren Bereich der Rückenlehne auf das Rückenlehnenpolster einwirkt, wobei beide Klappen um eine in der Breite des Sitzpolsters bzw. des Rückenlehnenpolsters verlaufende Drehachse verschwenkbar sind.

Ein Reisesitz dieser Art ist aus DE-A 2 262 594 bekannt. Bei dem bekannten Reisesitz ist das Rückenlehnenpolster in seiner Neigung gegenüber dem Sitzpolster nicht verstellbar und sind die beiden Klappen also starr miteinander verbunden und um eine gemeinsame Achse derart verschwenkbar, dass das Rückenlehnenpolster nach aussen gegen den Rücken einer Person gedrückt wird, wenn diese sich auf das Sitzpolster setzt und die am Sitzpolster angreifende Klappe nach unten drückt. Auf diese Weise soll das aufrechte Sitzen einer Person erleichtert werden. Aus der DE-A 2 262 594 ist es ferner bei einer anderen Ausführungsform bekannt, die Rückenlehne in einer Neigung gegenüber der Sitzplatte zu verstellen.

Aus FR-A 2 067 806 ist ein Sitz bekannt, bei dem in L-förmiger Ausbildung die Rückenlehne einstückig mit einem Teil der Sitzplatte ausgebildet ist, wobei die Rückenlehne und der restliche Teil der Sitzplatte jeweils um eine eigene Drehachse schwenkbar sind. Mit dieser Konstruktion soll es der Sitzbenutzer sowohl in einer teilweise zurückgelehnten Position als auch in einer völlig aufrechten Sitzposition bequem haben. In der zurückgelehnten Position kann aber der Sitzbenutzer nicht bequem liegen, da sein Körper in der Ecke zwischen Rückenlehne und Sitzplatte nicht abgestützt wird, wenn das Gesäss des Sitzbenutzers von der Rückenlehne wegrutscht.

Der Erfindung liegt nun die Aufgabe zugrunde, einen Reisesitz zu schaffen, bei dem die Neigung der Rückenlehne soweit verstellbar ist, dass der Sitzbenutzer im gewissen Umfang bequem eine Liegeposition einnehmen kann, ohne dass sich die Ecke zwischen Sitzpolster und Rückenlehnenpolster störend bemerkbar machen würde.

Diese Aufgabe wird bei einem Reisesitz der eingangs genannten Art erfindungsgemäss dadurch gelöst, dass jede Klappe um eine eigene Drehachse und der Rückenlehnenträger gegenüber dem Sitzpolsterträger verschwenkbar ist, wobei bei Verschwenkung der Rückenlehne beide Klappen gegen das jeweilige Polster verschwenkt werden.

Wenn nun die Rückenlehne teilweise zurückgeschwenkt wird und der Sitzbenutzer bei Einnahme der Liegeposition mit dem Gesäss nach vorne weg von der Rückenlehne rutscht – vor allen Dingen dann, wenn er auf der Seite liegen möchte –, so wird die Ecke zwischen dem Sitzpolster und der Rückenlehne aufgrund der erfindungsgemässen Wirkung der Klappen ausgefüllt und für den Körper somit eine Abstützung geschaffen, die nur in der Liegeposition wirksam ist und in der Sitzposition, wenn die Rückenlehne relativ steif steht, unwirksam ist. Auf diese Weise wird der Komfort des Reisesitzes wesentlich erhöht.

Die Erfindung wird nun anhand der Zeichnung näher erläutert. In der Zeichnung stellen dar:

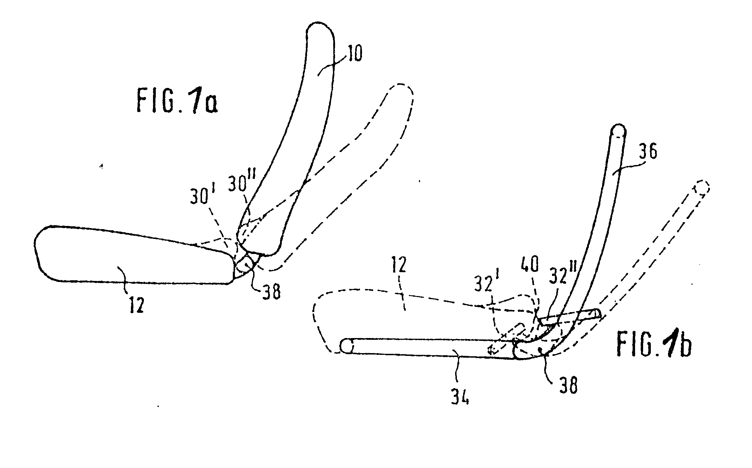

Fig. 1a und 1b: schematische Seitenansichten des erfindungsgemässen Reisesitzes

In Fig. 1a sind mit ausgezogenen Linien das Sitzpolster und die gepolsterte Rückenlehne 10 in einer Sitzposition dargestellt, in der die oben erwähnte Abstützung noch nicht in Erscheinung tritt. Mit gestrichelten Linien sind jedoch die Formen des Sitzpolsters und der gepolsterten Rückenlehne dargestellt bei einer Liegeposition des Sitzes, in der die oben erwähnte Abstützung auftritt. Es wird in diesem Zusammenhang auf die Bezugszeichen 30' und 30" in Fig. 1a verwiesen, die eine Auswölbung der jeweiligen Polster an den einander gegenüberliegenden Enden bezeichnen.

Diese Auswölbungen werden nun mit Hilfe von Klappen 32', 32" erzielt, von denen die eine (32') an einem Träger 34 für das Sitzpolster 12 und die andere 32" an einem Träger 36 für die Rückenlehne 10 angeordnet ist. Diese Klappen sind jeweils um eine sich in der Breite des Sitzes erstreckende Achse aus der Polsterebene heraus verschwenkbar, wobei die freien Enden einander zugewandt sind, und wirken von unten bzw. von hinten auf die Unterseite des jeweiligen Sitzpolsters ein, um es anzuheben. Ein Anheben bzw. ein Verschwenken dieser Klappen zur Erzielung der Auswölbung 30' und 30" wird in geschickter und einfacher Weise zwangsweise dadurch erreicht, dass der Rückenlehnenträger 36 mit einem über die Schwenkachse 38 des Rückenlehnenträgers hinaus vorstehenden, zum Sitzpolster 12 hin abgebogenen Fortsatz 40 bei einem Verschwenken nach hinten automatisch auf die Klappe 32' des Sitzpolsterträgers 34 von unten einwirkt und diese anhebt. Gleichzeitig wirkt ein zur Rückenlehne hin abgebogener und über die Schwenkachse 38 vorstehender Fortsatz des Sitzpolsterträgers 34 automatisch bei Verschwenkung der Rückenlehne auf die Unterseite der Klappe 32" des Rückenlehnenträgers ein, so dass diese angehoben wird. Dieser Mechanismus geht klar aus Figur 1b hervor. Auf diese Weise werden also die Auswölbungen 30' und 30", die in der Liegeposition des Sitzes die Ecke zwischen Rückenlehne und Sitzpolster ausfüllen, erzielt.

## Patentansprüche

1. Reisesitz mit einem Träger (34) für ein Sitzpolster (12) und einem Träger (36) für ein Rückenlehnenpolster (10) sowie einer Klappe (32'), die von unten her im hinteren Bereich des Sitzpolsters auf dieses einwirkt, und einer Klappe (32"), die von hinten her im unteren Bereich der Rückenlehne auf das Rückenlehnenpolster (10) einwirkt, wobei beide Klappen um eine in der Breite des Sitzpolsters bzw. des Rückenlehnenpolsters verlaufende Drehachse verschwenkbar sind, dadurch gekennzeichnet, dass jede Klappe (32', 32'') um eine eigene Drehachse und der Rückenlehnenträger (36) gegenüber dem Sitzpolsterträger (34) verschwenkbar ist, wobei bei Verschwenkung der Rückenlehne beide Klappen (32', 32'') gegen das jeweilige Polster verschwenkt werden.

2. Reisesitz nach Anspruch 1, dadurch gekennzeichnet, dass der Sitzpolsterträger (34) am hinteren Ende ein Organ aufweist, das bei Verschwenkung der Rückenlehne (10) nach hinten zwangsweise von unten her an der Klappe (32'') des Rückenlehnenträgers (36) angreift, so dass diese beim Verschwenken des Rückenlehnenträgers nach hinten bzw. nach unten zwangsweise durch das Organ am Sitzpolsterträger (34) aus dem Rückenlehnenträger herausgeschwenkt wird, und dass der Rückenlehnenträger (36) ein Organ (40) aufweist, das bei Verschwenkung der Rückenlehne nach hinten zwangsweise von unten her an der Klappe (32') des Sitzpolsterträgers (34) angreift, so dass diese beim Verschwenken des Rückenlehnenträgers (10) nach hinten zwangsweise durch das Organ (40) am Rückenlehnenträger (36) aus dem Sitzpolsterträger herausgeschwenkt wird.

**Revendications**

1. Siège de voyage comprenant un support (34) pour un coussin de siège (12) et un support (36) pour un coussin de dossier (10) ainsi qu'un volet (32') qui agit à partir du bas sur le coussin de siège, dans sa zone arrière, et un volet (32'') qui agit à partir de l'arrière sur le coussin de dossier (10) dans la zone inférieure du dossier, les deux volets étant capables de pivoter autour d'un axe de pivotement disposé dans la largeur du coussin du siège et respectivement du coussin de dossier, caractérisé en ce que chaque volet (32', 32'') est capable de pivoter autour d'un axe de pivotement propre et en ce que le support de dossier (36) est capable de pivoter par rapport au support de coussin de siège (34), les deux volets (32', 32'') étant, lors du pivotement du dossier, amenés à pivoter contre le coussin correspondant.

2. Siège de voyage suivant la revendication 1, caractérisé en ce que le support du coussin de siège (34) présente à l'extrémité arrière un organe qui, lors du pivotement du dossier (10) vers l'arrière, agit obligatoirement à partir du bas sur le volet (32'') du support de dossier (36) de façon que ce volet, lorsque le support de dossier pivote vers l'arrière et respectivement vers le bas, soit obligatoirement amené à pivoter hors du support de dossier par l'organe du support de coussin de siège (34) et en ce que le support de dossier (36) présente un organe (40) qui, lors du pivotement du dossier vers l'arrière, agit obligatoirement à partir du bas sur le volet (32') du support de coussin de siège (34) de façon que ce volet, lorsque le support de dossier (10) pivote vers l'arrière, soit obligatoirement amené à pivoter hors du support de coussin de siège par l'organe (40) du support de dossier (36).

**Claims**

1. Travelling seat with a support (34) for a seat cushion (12), with a support (36) for a backrest cushion (10) and with a flap (32') acting from below on the seat cushion in the rear region of the latter, as well as with a flap (32'') which acts from the rear on the backrest cushion (10) in the lower region of the backrest, the two flaps being pivotable about an axis of rotation extending over the width of the seat cushion or of the backrest cushion, characterised in that each flap (32', 32'') is pivotable about its own axis of rotation and the backrest support (36) is pivotable relative to the seat-cushion support (34), and when the backrest pivots the two flaps (32', 32'') are pivoted against the particular cushion.

2. Travelling seat according to Claim 1, characterised in that the seat-cushion support (34) has at the rear end a device which, when the backrest (10) pivots to the rear, engages forcibly from below on the flap (32'') of the backrest support (36), so that, when the backrest support pivots to the rear or downwards, the said flap (32'') is forcibly swung out of the backrest support by means of the device on the seat-cushion support (34), and in that the backrest support (36) has a device (40) which, when the backrest pivots to the rear, forcibly engages from below on the flap (32') of the seat-cushion support (34), so that, when the backrest support (10) pivots to the rear, the said flap (32') is forcibly swung out of the seat-cushion support by means of the device (40) on the backrest support (36).

FIG.**1**a

10

30' 30"

38

12

FIG.**1**b

36

12

32' 40 32"

34

38